(19) **Europäisches Patentamt European Patent Office Office européen des brevets**

(11) **EP 1 921 757 A1**

(12) **EUROPEAN PATENT APPLICATION**
published in accordance with Art. 153(4) EPC

(43) Date of publication:
**14.05.2008 Bulletin 2008/20**

(51) Int Cl.:
**H04B 1/707** (2006.01)

(21) Application number: **05772472.6**

(22) Date of filing: **08.08.2005**

(86) International application number:
**PCT/CN2005/001209**

(87) International publication number:
**WO 2007/016811 (15.02.2007 Gazette 2007/07)**

(84) Designated Contracting States:
**AT BE BG CH CY CZ DE DK EE ES FI FR GB GR HU IE IS IT LI LT LU LV MC NL PL PT RO SE SI SK TR**

(71) Applicant: **ZTE Corporation**
**518057 Shenzhen City,**
**Guandong Province (CN)**

(72) Inventors:
• **JIANG, Hai**
  **Guangdong 518057 (CN)**
• **CHEN, Linjiang**
  **Guangdong 518057 (CN)**

(74) Representative: **Gray, John James**
**Murgitroyd & Company**
**165-169 Scotland Street**
**Glasgow G5 8PL (GB)**

(54) **RESTRAIN METHOD FOR SIGNAL INTERFERENCE FROM USERS IN NEIGHBOR CELLS**

(57) The present invention provides a suppression method for signal interference from users in neighboring cells. First, a channel estimation is performed for user signals of the local and the neighboring cells to estimate the channel impulse responses for the users of the local and the neighboring cells; second, based on the channel impulse responses of said cells, a joint detection is performed for the user signals of each cell, obtaining the symbol for each cell user. The method takes the minority high-power user signals from neighboring cells as the signals that can be demodulated, and adds them to the joint detection, thereby eliminates the interference caused by these high-power user signals from the neighboring cells, effectively suppresses the interference from the neighboring cells of co-frequency and enhances system performance.

fig. 4

## Description

### Technical Field

The present invention relates to a suppression method for signal interference, especially relates to a suppression method for signal interference from users in neighboring cells in a TD-SCDMA (Time Division-Synchronous Code Division Multiple Access) system.

### Background of the Invention

CDMA system is a self-interference system, in which, for a target user, other users within the same cell are interference, and users from neighboring cells of co-frequency are interference as well. In common CDMAsystems, these interferences are mainly suppressed by the good cross-correlation characteristic of the channelized codes of users. However, it can only reduce the interferences between the users but can not completely eliminate them.

For that reason, the joint detection technology is used in the TD-SCDMA system, which means that when demodulating the signals of the target user, it doesn't take the signals from other users within the same cell as unknown interference, instead, it takes them as the signals that can be demodulated, and meanwhile, it demodulates the signals of all the users within the same cell. As such, the cross-interference between the users within the same cell is eliminated. However, it still takes the user signals from the neighboring cells of co-frequency as interference. Under some conditions, the interference from the neighboring cells of co-frequency will seriously influence the performance of the system.

The interference from neighboring cells is generally suppressed by the good cross-correlation characteristic of different scrambling codes among cells. However, the length of scrambling code is relatively short in TD-SCDMA system, so it is possibly unideal in suppressing interference from neighboring cells under some conditions. As a result, certain methods that can be employed to effectively suppress the interference from neighboring cells of co-frequency will enhance the system performance and will be favorable for employing networking method with higher utilization rate of frequency spectrum.

### Summary of the Invention

The technical problem to be solved in the present invention is to provide a suppression method for signal interference from users in neighboring cells to reduce the effect of interference from the neighboring cells in TD-SCDMA system and improve the performance ofthe system.

The suppression method for signal interference from users in neighboring cells provided by the present invention comprises the following steps of:

performing channel estimation for user signals of local and neighboring cells to estimate the channel impulse responses of the users of the local and the neighboring cells; and
performing joint detection for user signals from each cell based on the channel impulse responses of each said cell, and obtaining the symbol of each cell user.

The invention takes the minority high-power user signals from neighboring cells (e.g. the user signals of the neighboring cells located at the edge of the local and the neighboring cells) as the signals that can be demodulated instead of unknown interference; and adds them to the joint detection, so as to eliminate the interference caused by these high-power user signals from the neighboring cells, effectively suppress the interference from the neighboring cells of co-frequency, and enhance the system performance.

### Brief Description of the Drawings

Fig 1 is the block diagram of the embodiment for channel estimation solution one as described in the present invention;
Fig 2 is the block diagram of the embodiment for channel estimation solution two as described in the present invention;
Fig 3 is the block diagram for the first embodiment of the present invention; and
Fig 4 is the block diagram for the second embodiment of the present invention.

### Preferred Embodiments of the Invention

A channel estimation for the user signals of the local and the neighboring cells firstly needs to be made in the present invention. In the TD-SCDMA system, training sequence is launched so that the channel estimation is made at the receiving end. The training sequence signal $e_m$ received can be expressed as:

$$e_m = M_0 h_0 + \sum_{i=1}^{N} M_i h_i + n_m \qquad\qquad \text{Exp (1)}$$

wherein, $M_0$ represents the training sequence matrix of the local cell, with a dimension of 128x128; $M_i, i=1,...,N$ represents the training sequence matrix of the N neighboring cells hoping to eliminate interference, with a dimension of 128x128, N can be set according to the practical needs. For example, considering the first level neighboring cell of the local cell, $n_m$ represents various interferences and noises, with a dimension of $128\times1$; $h_0$ represents the channel impulse response of the user of local cell, with a dimension of $128\times1$; $h_i, i=1,...,N$ represents the channel impulse responses of the users of N neighboring cells, with a dimension of 128x1.

This invention aims at obtaining the estimation of $h_0$ and $h_i, i=1, ..., N$ through signal processing algorithm, thus the following two solutions can be employed:

Channel Estimation Solution 1:

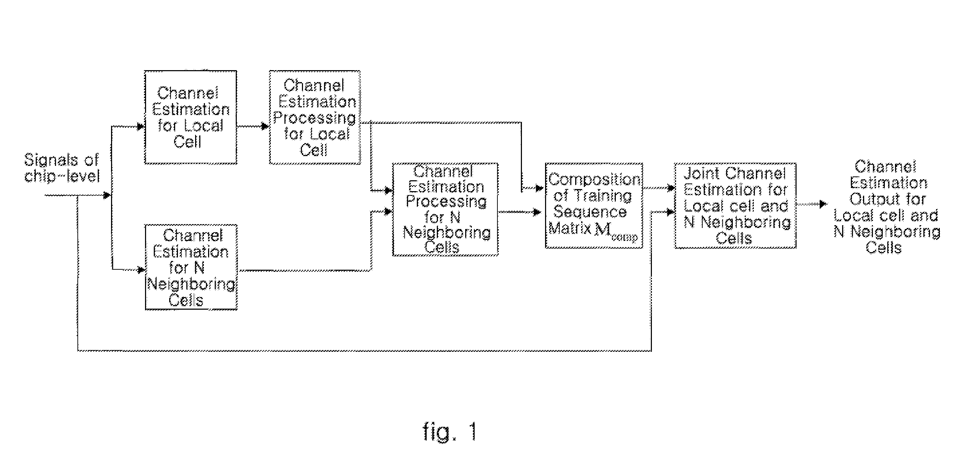

Fig1 is a schematic view for the embodiment of Channel Estimation Solution 1 as described in the invention:

Step One, performing a preliminary estimation for $h_i, i=0,...,N$ as follows:

$$\widehat{h_i} = M_i^{-1} e_m = h_i + \sum_{j=0, j\neq i}^{N} M_i^{-1} M_j h_j + M_0^{-1} n_m \qquad\qquad \text{Exp (2)}$$

wherein, $\widehat{h_i}$ comprises the errors brought by the signals and noises from other cells, but the errors are significantly reduced by multiplying with $M_i^{-1}$; due to the particularity of the construction of matrix $M_i, i=1,...,N$, i.e. the particularity of rotate right, the Exp (2) can be done by using Fast Fourier Transform, which reduces computation load.

Step Two, performing a post-channel processing for $\widehat{h_0}$ and obtaining the tap position of the user signal path, i.e. comparing the power of 128 taps $\widehat{h_0}(k)$, $k=1,...,128$ of $\widehat{h_0}$ with a threshold (the value of the threshold is related to the noise power), the taps with the power below the threshold being considered as noise and the value being set to be zero, the taps with the power above the threshold being considered as signals and the value being saved; supposing the number of the signal taps being $L^0$ after the post-channel process, then the signal tap position being $\{k_1^0, k_2^0, ... k_{L^0}^0\}$.

Step Three, performing post-channel processing for $\widehat{h_i}$, $i=1, ..., N$, i.e. comparing the power of 128 taps $\widehat{h_i}$ $(k)$, $k=1, ...,128$ of $\widehat{h_i}$, $i=1, ..., N$ with a threshold, the taps with the power below the threshold being considered as noise and the value being set to be zero; the taps with the power above the threshold being considered as signals and the value being saved; obtaining the tap positions of the user signal paths as $\{k_1^i, k_2^i, ... k_{L^i}^i\}, i=1,...,N$. If $\sum_{i=1}^{N} L^i > 128 - L^0$, it is to take $(128-L^0)$ tap positions with the maximum power.

Step Four, performing a joint estimation for the channel impulse response of each said cell as follows:

$$\widehat{h}_{comp} = (M_{comp}^H M_{comp})^{-1} M_{comp}^H e_m \qquad\qquad \text{Exp (3)}$$

wherein, $M_{comp}$ is a composite matrix, with a dimension of 128 * $\sum_{i=0}^{N} L^i, (\sum_{i=0}^{N} L^i \leq 128)$; its construction method is:

taking the following sequences $\{k_1^i, k_2^i, ... k_{L^i}^i\}$, $i = 0, ..., N$ of matrix $M_i$, and merging them together to form $M_{comp}$; $h_{comp}$

is the composite channel impulse response, with a dimension of $\sum_{i=0}^{N} L^i \times 1$, it comprises the channel impulse response of the user of the local cell and the channel impulse responses of the users of the N neighboring cells.

Generally speaking, steps one to three are for estimating time delay position of the user signal path of each said cell, and step 4 is for performing joint channel estimation for the users of multiple cells, and the channel estimation interference among each cell user is eliminated.

Channel Estimation Solution 2:

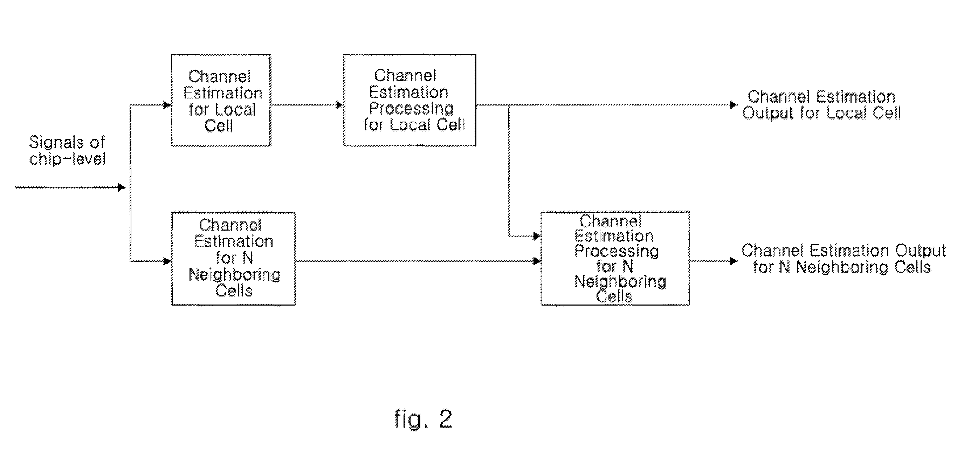

Fig 2 is a schematic view for the embodiment of Channel Estimation Solution 2 as described in the invention.

Solution 2 is a simplification of Solution 1, more specifically, it reserves steps one to three of Solution 1 and discards step four. Step four of Solution 1 is discarded because it requires matrix inversion, and the matrix does not possess the property of rotate right, thus it can not simplify the computation through Fast Fourier Transform, resulting in a complicated computation. However, the discarding of step four also has shortcomings, because the channel esti-

mation $\hat{h}$ calculated from Exp (2) includes errors brought by signals from other cells, which can be eliminated by step four.

A joint detection needs to be performed for the user signals of the local cell and the N neighboring cells after the channel estimation. The system equation can be expressed as:

$$
\begin{aligned}
e_d &= A_0 d_0 + \sum_{i=1}^{N} A_i d_i + n_d \\
&= \sum_{i=0}^{N} A_i d_i + n_d \\
&= \begin{bmatrix} A_0 & A_1 & L & A_N \end{bmatrix} \begin{bmatrix} d_0 \\ d_1 \\ M \\ d_N \end{bmatrix} + n_d \\
&\triangleq A_{comp} d_{comp} + n_d
\end{aligned}
\qquad \text{Exp (4)}
$$

Wherein, $A_i, i = 0, ..., N$ is system matrix for each cell and is constituted by the spread spectrum code, scrambling code and channel impulse responses of the users of each said cell. The scrambling code of the neighboring cell and the spread spectrum code of the user are obtained in the following two situations: Situation one, the neighboring cell and the local cell have the same base station, under such condition, the scrambling code of the neighboring cell and the spread spectrum code of the user can be exactly ascertained without using RNC (Radio network controller); Situation two, the neighboring cell and the local cell have different base stations, under such condition, the scrambling code of the neighboring cell and the spread spectrum code of the user can be obtained by RNC through signaling interaction.

When performing estimation for $d_{comp}$ in Exp (4), Zero Forcing Block Linear Equalizer (ZE-BLE) or Minimum Mean Square Error Block Linear Equalizer (MMSE-BLE) estimation can be used as follows:

Zero Forcing Block Linear Equalizer estimation:

$$\hat{d}_{comp} = (A^H_{comp} R_n^{-1} A_{comp})^{-1} A^H_{comp} R_n^{-1} e_d \qquad \text{Exp (5)}$$

Minimum Mean Square Error Block Linear Equalizer estimation:

$$\hat{d}_{comp} = (A^H_{comp} R^{-1}_n A_{comp} + R^{-1}_d)^{-1} A^H_{comp} R^{-1}_n e_d \qquad \text{Exp (6)}$$

Wherein, $R_n$ is autocorrelation matrix of the interference noise $n_d$, $R_d$ is autocorrelation matrix of the signal $d_{comp}$.

If there are many user signals of the neighboring cells to be solved, causing that the column rank of matrix $A_{comp}$ is larger than the row rank and the Exp (4) has infinite solutions, then the following steps can be taken to find out the unique solution:

adding the number of receiving antennae to increase the row rank;

or reducing the number of user signals of the neighboring cells to be solved so as to reduce the row rank, which, however, will increase the errors of $\hat{d}_{comp}$ (Exp (5) or (6));

or adding restriction conditions to find out the unique solution, for example, the restriction condition can be that each user signal $\hat{d}_{comp}$ has the minimum mean square error in distance with regard to the constellation points of modulation constellation map.

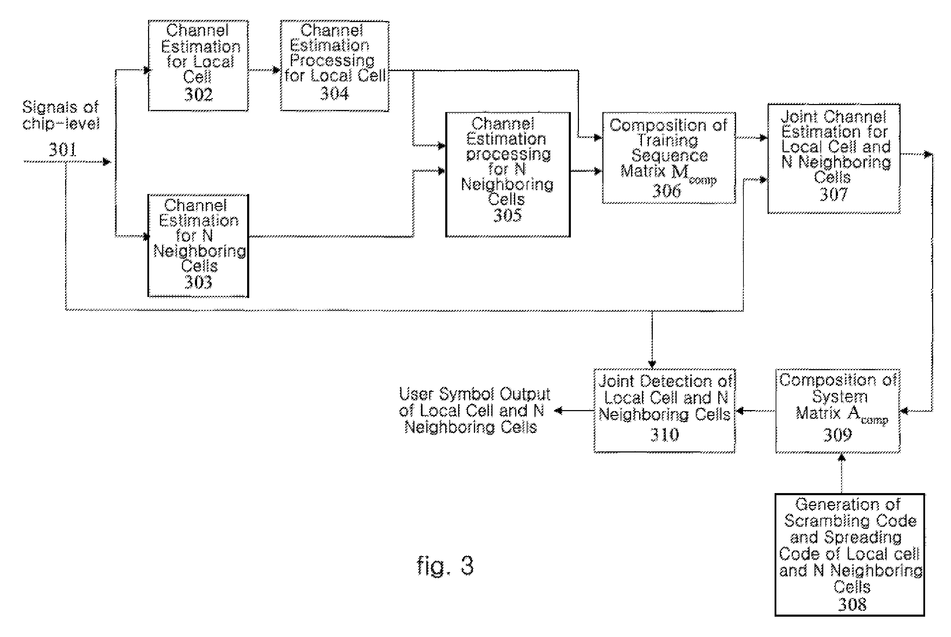

When taking the Channel Estimation Solution One, the steps of the whole scheme of the invention are as shown in fig 3, which is block diagram for the first embodiment of the whole technical scheme of the present invention:

Step 301: receiving sampling signals of chip-level;

Steps 302 and 303: performing preliminary channel estimation for the local cell and the N neighboring cells, as shown in Exp (2);

Step 304: performing post-channel processing for the preliminary channel estimation of the local cell, i.e. comparing the powers of 128 taps $\hat{h}_0(k)$, $k = 1,...,128$ of $\hat{h}_0$ with a threshold, the taps with the power below the threshold being considered as noise, and the values being set to be zero; the taps with the power above the threshold being considered as signals and the values being saved, and the obtained signal tap positions being $\{k^0_1, k^0_2, ... k^0_{L^0}\}$;

Step 305: performing post-channel processing for channel estimation $\hat{h}_i$, $i=1,...,N$ of the N neighboring cells, i.e. comparing the powers of 128 taps $\hat{h}_0(k)$, $k=1,...,128$ of $\hat{h}_i$, $i=1,...,N$ with a threshold, the taps with the power below the threshold being considered as noise and the values being set to be zero; the taps with the power above the threshold being considered as signals and the values being saved, and the obtained signal tap positions being $\{k^i_1, k^i_2, ..., k^i_{L^i}\}$, $i=1,...,N$;

Step 306: combining the columns $\{k^i_1, k^i_2, ..., k^i_{L^i}\}$, $i=0,...,N$ of matrix $M_i$ together to form matrix $M_{comp}$;

Step 307: performing joint channel estimation for the local cell and the neighboring cells, get the solution of $\hat{h}_{comp}$, as shown in Exp (3);

Step 308: generating the scrambling code the spread spectrum code of the local cell and the neighboring cells;

Step 309: composing matrix $A_{comp}$ using $\hat{h}_{comp}$ and the scrambling code of each cell, as well as the spread spectrum code of each cell user, as shown in Exp (4); and

Step 310: performing the joint detection for the user signals of each cell and obtaining the symbol $\hat{d}_{comp}$ of each cell user, as shown in Exp (5) or (6).

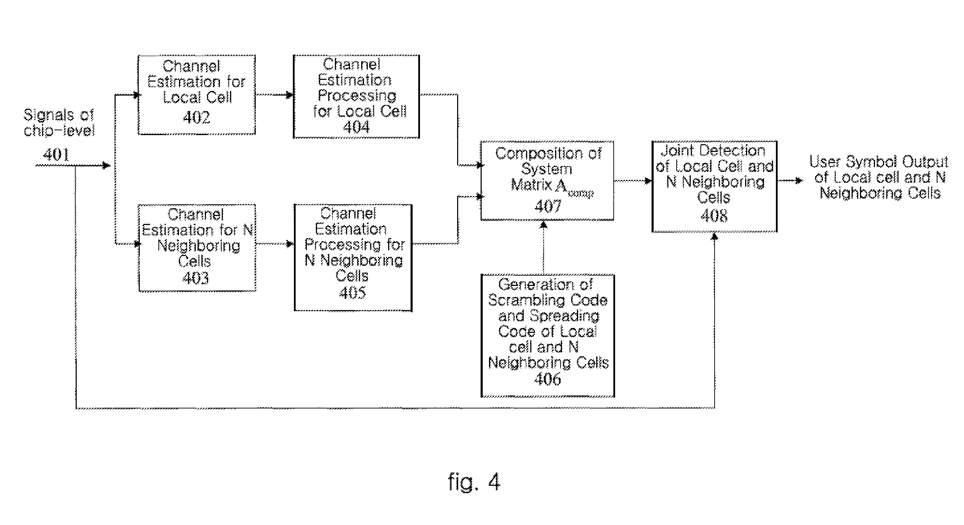

When taking the Channel Estimation Solution Two, the steps of the whole scheme are shown in fig 4, which is the block diagram for the second embodiment of the present invention:

Step 401: receiving sampling signals of chip-level;

Steps 402 and 403: performing preliminary channel estimation for the local cell and the neighboring cells, as shown in Exp (2);

Step 404: performing post-channel processing for the preliminary channel estimation of the local cell, i.e. comparing the powers of 128 taps $\hat{h}_0(k)$, $k = 1,...,128$ of $\hat{h}_0$ with a threshold, the taps with the power below the threshold being considered as noise and the values being set to be zero; the taps with the power above the threshold being considered as signals and the values being saved, the obtained signal tap positions being $\{k_1^0, k_2^0, \dots k_{L^0}^0\}$;

Step 405: performing post-channel processing for the channel estimation $\widehat{h}_i$, $i$=1,...,$N$ of the N neighboring cells, i.e. comparing the powers of 128 taps $\widehat{h}_0(k)$, $k$=1, ...,128 of $\widehat{h}_i$, $i$=1,...,$N$ with a threshold, the taps with the power below the threshold being considered as noise and the value being set to be zero; the taps with the power above the threshold being considered as signals and the values being saved, the obtained signal tap positions being

$\{k_1^i, k_2^i, \dots, k_{L^i}^i\}$, $i$=1,...,$N$;

Step 406: generating the scrambling code the spread spectrum code of the local cell and the neighboring cells;

Step 407: composing matrix $A_{comp}$ using $\widehat{h}_{comp}$ and the scrambling code of each cell, as well as the spread spectrum code of each cell user, as shown in Exp (4); and

Step 408: performing the joint detection for the user signals of each cell and obtaining the symbol $\widehat{d}_{comp}$ of each cell user, as shown in Exp (5) or (6).

**Industrial Applicability**

The method for reducing the interference from neighboring cells provided by the present invention takes the minority high-power user signals from neighboring cells as the signals that can be demodulated, and adds them to the joint detection, therefore eliminates the interference caused by these high-power user signals of the neighboring cells. TD-SCDMA system is a time division system, in which, different users scatter in different time slots, and the maximum number of the users within the same time slot of one cell is eight. The number of high-power user signals in one time slot of neighboring cells (usually the users located at the edge of the local cell and neighboring cells) is usually small, so generally speaking, the computing load added by using the method of the present invention will not be too large.

The method described in the present invention can not be only applied in base station, but mobile terminals as well, especially those mobile terminals located at the edge of the cells.

**Claims**

1.  A suppression method for signal interference from users in neighboring cells, comprising following steps of:

    making a channel estimation for user signals of a local cell and neighboring cells to estimate channel impulse responses of the users of the local cell and the neighboring cells; and
    making a joint detection for the user signals from each said cell based on the channel impulse responses of each said cell and obtaining symbols for each cell user.

2.  The method of claim 1, wherein said step of the channel estimation comprises the following steps of:

    making a preliminary channel estimation for the local cell and the neighboring cells according to sampling signals of chip-level received; and
    estimating time delay position of signal path of each said cell user after performing a post-channel processing for preliminary channel estimation of the local cell and neighboring cells.

3.  The method of claim 2, further comprising the following steps of:

    making a joint estimation for the channel impulse response of each said cell in order to eliminate channel estimation interference among each cell user.

4.  The method of claim 3, wherein said step of the joint estimation further comprises the following steps of:

    constructing matrix $M_{comp}$ based on the time delay position of the signal path of each said cell user; and
    making the joint estimation for each said cell based on the matrix $M_{comp}$.

5.  The method of claim 1, wherein said step of the joint detection comprises the following steps of:

    determining scrambling codes and spread spectrum codes for the local cell and the neighboring cells;
    composing matrix $A_{comp}$ based on the channel impulse responses of each said cell as well as the scrambling codes and the spread spectrum codes; and

making the joint detection for the user signals of each said cell based on said matrix $A_{comp}$ and obtaining a user symbol $\widehat{d}_{comp}$ of each said cell.

6. The method of claim 2, wherein in said step of the preliminary channel estimation, a method used is as follows:

$$\widehat{h}_i = M_i^{-1} e_m = h_i + \sum_{j=0, j \neq i}^{N} M_i^{-1} M_j h_j + M_0^{-1} n_m$$

wherein, $\widehat{h}_i$, $i=1,...,N$;

$$e_m = M_0 h_0 + \sum_{i=1}^{N} M_i h_i + n_m \; ;$$

$M_0$ represents training sequence matrix of the local cell; $M_i$, $i=1,...,N$ represents the training sequence matrix ofN neighboring cells expecting to eliminate the interference; $n_m$ represents various interferences and noises; $h_0$ represents the channel impulse response of the users of the local cell; $h_i$, $i=1,...,$ N represents the channel impulse responses ofthe users ofthe N neighboring cells.

7. The method of claim 6, wherein in the step of performing post-channel processing for the preliminary channel estimation of the local cell and the neighboring cells, the step of post-channel processing for the local cell includes:

comparing powers of 128 taps $\widehat{h}_0(k)$, $k = 1,...,158$ of $\widehat{h}_0$ with a threshold, the taps with the powers below the threshold being considered as noise and their values being set to be zeroes, the taps with the powers above the threshold being considered as signals and their values being saved;

supposing a number of signal taps being $L^0$ after the post-channel processing, then positions of the signal taps being $\{k_1^0, k_2^0, ...k_{L^0}^0\}$,

and the post-channel processing for the neighboring cells includes:

comparing the powers of 128 taps $\widehat{h}_i(k)$, $k=1,...,128$ of $\widehat{h}_i$ $i=1,...,N$ with a threshold, the taps with the powers below the threshold being considered as noise and their values being set to be zeroes, the taps with the powers above the threshold being considered as signals and their values being saved;

obtaining the tap positions of the user signal paths being $\{k_1^i, k_2^i, ...k_{L^i}^i\}$, $i=1,...,N$; if $\sum_{i=1}^{N} L^i > 128 - L^0$, (128-$L^0$) tap positions with maximum powers being taken.

8. The method of claim 4, wherein in said step of the joint estimation, a method used is as follows:

$$\widehat{h}_{comp} = (M_{comp}^H M_{comp})^{-1} M_{comp}^H e_m \; ;$$

wherein, $M_{comp}$ is a composite matrix, with a dimension of128 $* \sum_{i=0}^{N} L^i$, and its construction method is: taking follow columns $\{k_1^i, k_2^i, ...k_{L^i}^i\}$, $i=0,...,N$ of matrix $M_i$, then merging them together to form $M_{comp}$;

$\hat{h}_{comp}$ is a composite channel impulse response, with the dimension of $\sum_{i=0}^{N} L^{i} * 1$, it comprises the channel impulse response of the users of the local cell and the channel impulse responses of the users of the N neighboring cells.

9.  The method of claim 5, wherein in said step of the joint detection, its equation is represented as follows:

$$e_d = A_0 d_0 + \sum_{i=1}^{N} A_i d_i + n_d$$

$$= \sum_{i=0}^{N} A_i d_i + n_d$$

$$= \begin{bmatrix} A_0 A_1 L & A_N \end{bmatrix} \begin{bmatrix} d_0 \\ d_1 \\ M \\ d_N \end{bmatrix} + n_d$$

$$\triangleq A_{comp} d_{comp} + n_d$$

wherein, $A_i$, $i = 0,...,N$ represents a system matrix of each said cell and is constituted by the spread spectrum codes, the scrambling codes and the channel impulse responses of the users of each said cell;
when performing the estimation for $d_{comp}$, Zero Forcing Block Linear Equalizer or Minimum Mean Square Error Block Linear Equalizer can be employed, wherein,
Zero Forcing Block Linear Equalizer:

$$\hat{d}_{comp} = (A^{H}{}_{comp} R_n^{-1} A_{comp})^{-1} A^{H}_{comp} R_n^{-1} e_d;$$

Minimum Mean Square Error Block Linear Equalizer:

$$\hat{d}_{comp} = (A^{H}{}_{comp} R_n^{-1} A_{comp} + R_d^{-1})^{-1} A^{H}_{comp} R_n^{-1} e_d;$$

in which, $R_n$ represents a autocorrelation matrix of interference noise $n_d$, $R_d$ represents a autocorrelation matrix of signal $d_{comp}$.

10. The method of claim 5, wherein in said step of determining the scrambling codes and the spread spectrum codes of the local cell and the neighboring cells, when the neighboring cells and the local cell have different base stations, Radio network controller employs signaling interaction to obtain said scrambling codes and said spread spectrum codes.

fig. 1

fig. 2

EP 1 921 757 A1

Signals of
chip-level
301

Channel
Estimation
for Local
Cell
302

Channel
Estimation
Processing
for Local Cell
304

Channel
Estimation
for N
Neighboring
Cells
303

Channel
Estimation
processing
for N
Neighboring
Cells
305

Composition of
Training
Sequence
Matrix $M_{comp}$
306

Joint Channel
Estimation for
Local Cell and
N Neighboring
Cells
307

User Symbol Output
of Local Cell and N
Neighboring Cells

Joint Detection of
Local Cell and N
Neighboring Cells
310

Composition of
System
Matrix $A_{comp}$
309

Generation of
Scrambling Code
and Spreading
Code of Local cell
and N Neighboring
Cells
308

fig. 3

fig. 4

## INTERNATIONAL SEARCH REPORT

| International application No. |
| --- |
| PCT/CN2005/001209 |

A.  CLASSIFICATION OF SUBJECT MATTER

H04B1/707(2006.01) i

According to International Patent Classification (IPC) or to both national classification and IPC

B.  FIELDS SEARCHED

Minimum documentation searched (classification system followed by classification symbols)

H04B7/26  H04Q7/20 H04L27/30(2006.01)

Documentation searched other than minimum documentation to the extent that such documents are included in the fields searched

Electronic data base consulted during the international search (name of data base and, where practicable, search terms used)

WPI、EPODOC、PAJ、CNPAT :CHANNEL IMPULSE RESPONSE, ESTIMATION , UTILIZATION DECTECTION COMPREHENSIVE TEST+ JOINT TDSCDMA

C.  DOCUMENTS CONSIDERED TO BE RELEVANT

| Category* | Citation of document, with indication, where appropriate, of the relevant passages | Relevant to claim No. |
| --- | --- | --- |
| X | US6339612B1 Motorola,Inc. 15.JAN.2002 (15.01.2002) see abstract, column 3 line11-column 12 line 13, fig.2-4 | 1 |
| A | | 2-10 |
| A | CN1468011A  SIEMENS CHINA LTD. 14.JAN.2004 (14.01.2004)   see the whole document | 1-10 |

☐ Further documents are listed in the continuation of Box C.          ☒ See patent family annex.

| *    Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim (S) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"document member of the same patent family |

| Date of the actual completion of the international search | Date of mailing of the international search report |
| --- | --- |
| 06. Apr. 2006 (06. 04. 2006) | 29 · JUN 2006 (29 · 06 · 2006) |
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer LI Yi  Telephone No. (86-10)62084589 |

Form PCT/ISA/210 (second sheet) (April 2005)

**INTERNATIONAL SEARCH REPORT**
Information on patent family members

International application No.

PCT/CN2005/001209

| Patent Documents referred in the Report | Publication Date | Patent Family | Publication Date |
|---|---|---|---|
| US6339612 B1 | 2002-01-15 | KR343088 B | 2002-07-05 |
| | | WO9940698 A1 | 1999-08-12 |
| | | BR9814805 A | 2000-10-17 |
| | | EP1068688 A1 | 2001-01-17 |
| | | KR2001040780 A | 2001-05-15 |
| | | JP2002503057T | 2002-01-29 |
| CN1468011A | 2004-1-14 | NONE | |

Form PCT/ISA /210 (patent family annex) (April 2005)